# EUROPEAN PATENT APPLICATION

(11) **EP 1 900 277 A1**
(43) Date of publication of application: **19.03.2008**
(21) Application number: 07116205.1
(22) Date of filing: 12.09.2007
(51) Int. Cl.: A01K 1/03

(54) **Shelving system for cages for the containment of laboratory animals with a protection system against leakage of pathogenic substances, and to a cage for that shelving system**

(30) Priority: 14.09.2006 US 844635 P; 25.04.2007 US 926221 P
(71) Applicant: TECNIPLAST S.p.A., 21020 Buguggiate, Varese (IT)
(72) Inventor: Malnati, Giovanni, 21046 Malnate (IT); Tamborini, Paolo, 21010 Cardano al Campo (IT)
(74) Representative: Borsano, Corrado

(57) **Abstract**

It is described a cage for the containment of laboratory animals, to be positioned in a suitable shelving system, comprising: a cage basin (1); a cover in turn comprising a lower basin (2), able to be in contact with the cage basin, and a closing top (1), the lower basin (2) and the closing top (3) defining an internal empty space; one or more inlet openings (5) in the lower basin (2), wherefrom external air can come inside the cage basin; one or more intermediate apertures (10) in the lower basin (2), for the entrance of air inside the internal empty space of the cover; one or more outlet apertures in the rear side of the cover, for the exit of exhaust air.

## Description

### Field of the invention

The present invention relates to a shelving system for cages for the containment of laboratory animals with a protection system against leakage of pathogenic substances, and to a cage for that shelving system.

### Background of the invention

In the field of the housing of small rodents, the operator protection becomes more and more important, especially working with rats in toxicology and with pathogens at human risk.

Protection must be guaranteed in order to prevent the operator exposure towards allergens and unknown volatile chemical agents potentially carcinogenic or pathogenic.

Together with the protection, it is necessary to guarantee a remarkable practicability of use of the cage for a rapid and frequent access to the animals.

### Summary of the invention

To such purpose, a new rack has been studied permitting the cage to be slid off like a drawer and its top to be integral part of the rack to generate a laminar protecting barrier even when the "drawer" is opened for inspection or animal treatment.

It is an object of the present invention a cage for the containment of laboratory animals comprising: a cage basin; a cover in turn comprising a lower basin, able to be in contact with the cage basin, and a closing top, the lower basin and the closing top defining an internal empty space; one or more inlet openings in the lower basin, wherefrom external air can come inside the cage basin; one or more intermediate apertures in the lower basin, for the entrance of air inside the internal empty space of the cover; one or more outlet apertures in the rear side of the cover, for the exit of exhaust air.

It is a further object of the present invention a shelving system for one or more cages as defined above, for the containment of laboratory animals, comprising: a rack for hosting a number of said cages, comprising vertical members; one or more couples of sliding rails, fastened to said vertical members, on which said number of cages can slide; an exhaust system, for each of said number of cages, which catches and discharges the "dirty" air of the internal side of the cages through said air channel.

It is a still further object of the present invention a method for operating one or more cages in the shelving system.

These and further objects are achieved by means of a cage for the containment of laboratory animals, a shelving system for one or more of said cages, and a method for operating one or more cages in the shelving system, as described in the attached claims, which are considered an integral part of the present description.

### Brief description of the drawings

The invention will become fully clear from the following detailed description, given by way of a mere exemplifying and non limiting example, to be read with reference to the attached drawing figures, wherein:

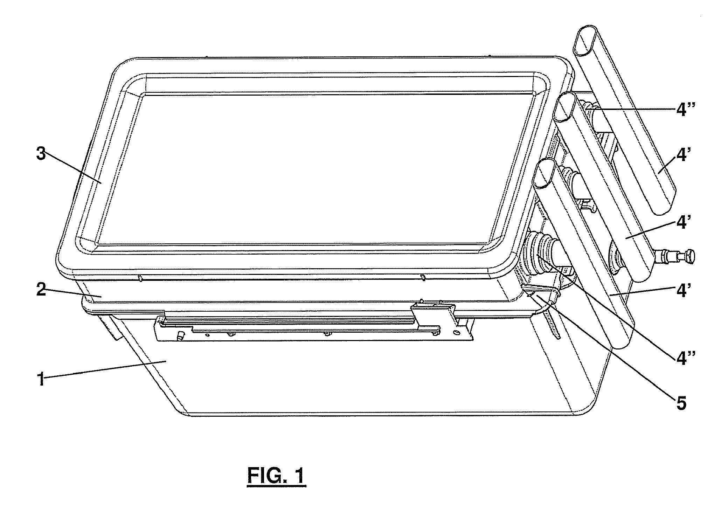

- Figure 1 shows a cage according to the invention in closed position;
- figures from 2 to 8 show different views in sections A-A, B-B, E-E, G-G, of the cage according to the invention in closed position;
- figures 9.1 - 9.4 show different views of the cage according to the invention in opened position;
- figures 10.1 - 10.4 show different views of the cage according to the invention in opened position, in section A-A' with different dispositions of a feeding grid and a beveraging bottle; the section A-A' in opened position is equivalent to section A-A in closed position;

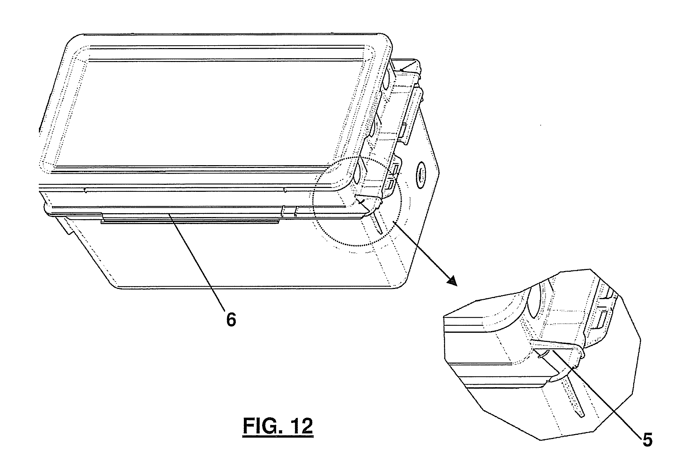

- figures 11 and 12 show the cover of the cage, respectively from the bottom and the top;
- figure 13 shows the basin of the cage;

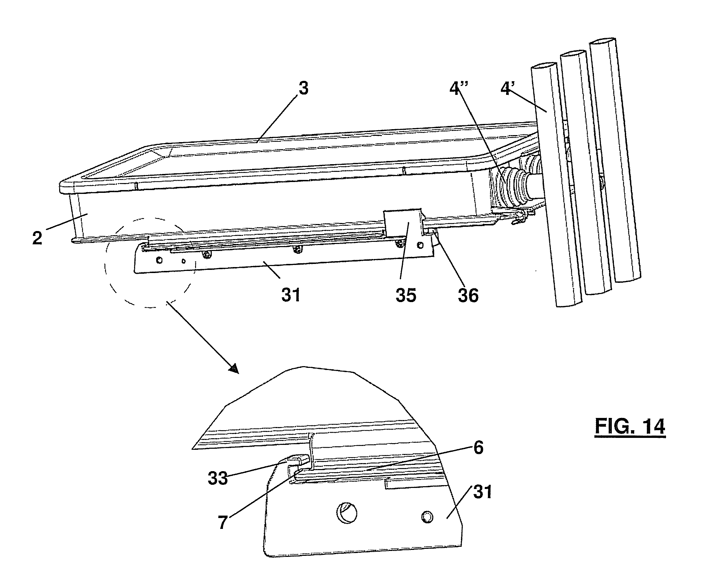

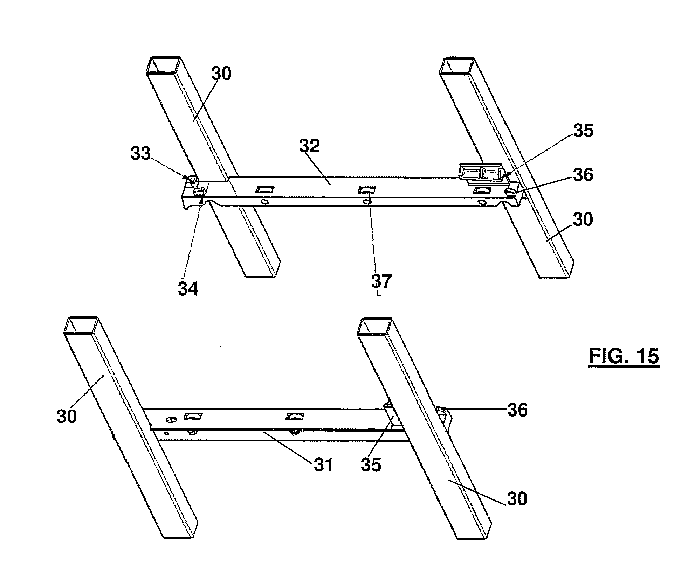

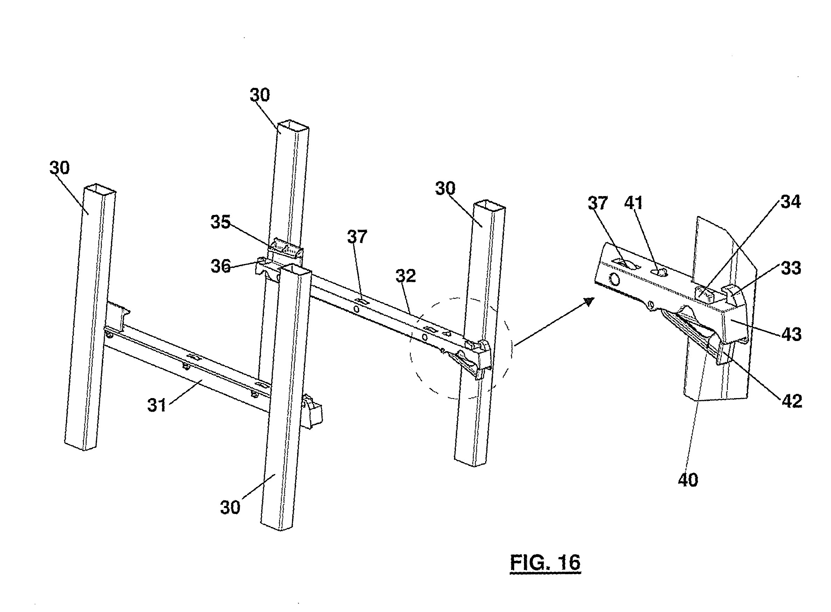

- figure 14 shows the rails in the system with the cover of the cage;
- figures 15 and 16 show the rails in the system where the cages slide.

The same reference numerals and letters in the figures designate the same or functionally equivalent parts.

### Description of the preferred embodiment

With reference to the figures, the cage, in particular for the shelving system, basically comprises one or more of the following elements:
A cage basin 1 preferably made of clear plastic, washable and autoclavable, symmetrical and reversible.
A cover comprising:
   - a lower basin 2 preferably made of clear plastics, washable and autoclavable.
   - A closing top 3 preferably made of clear plastic, washable and autoclavable.

The lower basin 2 and the closing top 3 define an internal empty space of the cover with external walls 2".

The lower part of the lower basin preferably comprises a raising portion 2' for increasing the available space in the cage basin 1 for living animals.

The top 3 is sealed to the lower basin 2 by means of a gasket having an external lip 3' extending from the upper edge of the lower basin 2 and engaging against the edge of the top 3. The top 3 is removable from the lower basin 2 without extracting the cage from the supporting rack, forming an upper extraction channel.

One or more intermediate apertures 10 are present preferably in the front part of the lower basin 2, where the exhausted air is forced to go through together with the air that enters the opened "drawer". The exhausted air may be "dirty" with allergens or unknown volatile chemical agents or pathogens.

The intermediate apertures 10 are preferably in the form of a small gap with a grid made of holes in the front lower side of the lower basin 2.

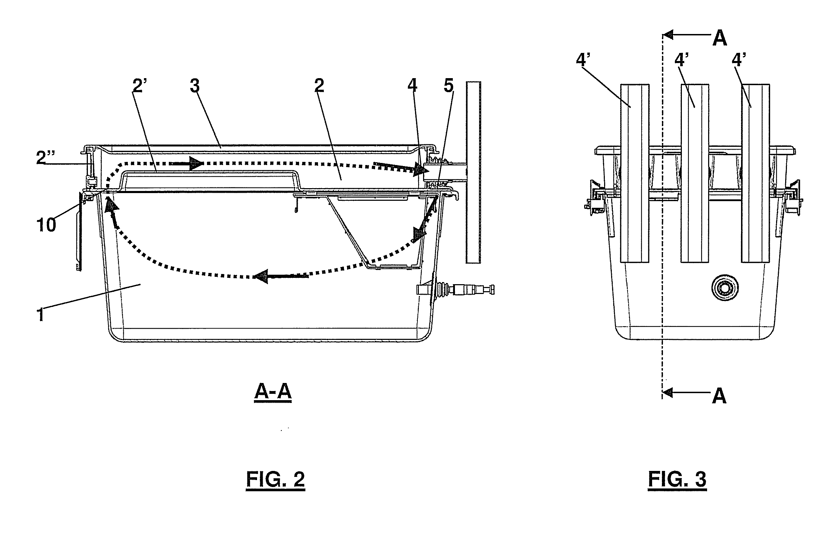

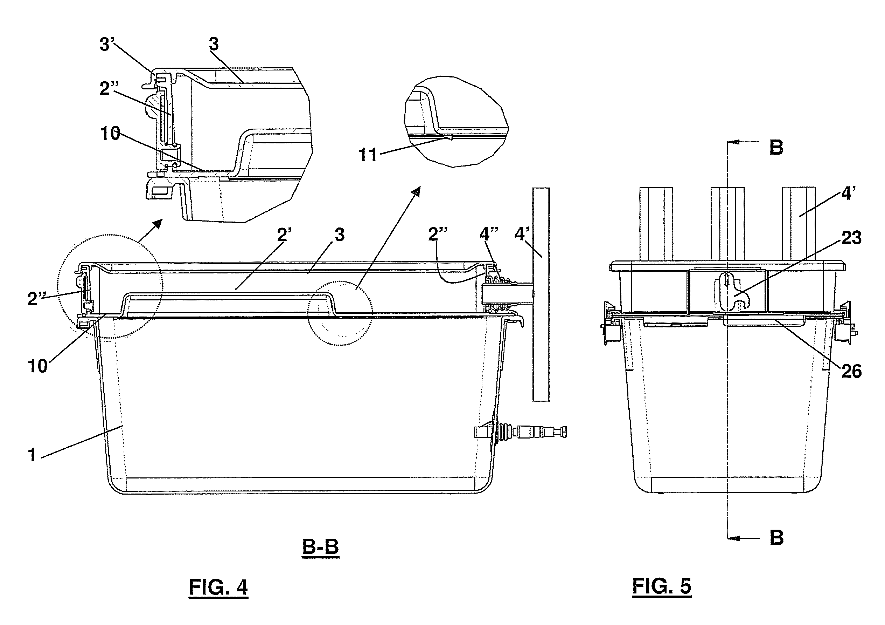

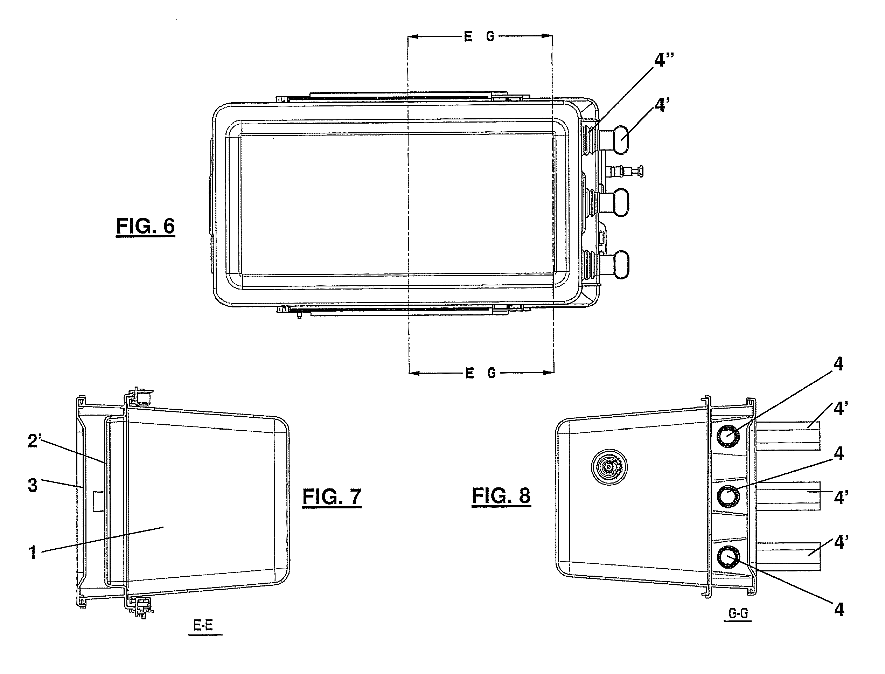

An internal channel, with the cage in closed position (dotted line with arrows in fig. 2), is formed by: one or more inlet openings 5 in the lower basin, preferably in the form of calibrated slots or holes (defined below) wherefrom external fresh air comes inside the cage basin 1; the interior of the cage basin 1; the intermediate aperture 10; the interior of the cover (inside the lower basin 2); one or more outlet apertures in the rear side of the cover.

An exhaust system 4 connected to the outlet apertures of the cage catches and discharges the "dirty" air of the internal side of the cage.

The exhaust system 4 is connected to the outlet apertures through one or more pipes 4' and rubber bellows 4", guaranteeing the air-tightness of the system.

Said one or more inlet openings 5 for the entrance of air in the cage basin 1 are preferably placed in the back side of the lower basin 2 and positioned in such a way as to create a flow of "fresh" air at low speed able to remove "dirty" air that is taken towards the channel of the exhaust system 4.

When the cage is closed, the slots 5 put in communication the external environment with the internal part of the cage basin 1, so as to let air enter the basin from the outside. When the cage is opened, the slots 5 are totally external to the cage basin 1, so as the slots need no closure valve.

Preferably a feeding grid 20 is slidably positioned inside the cage with or without a beveraging bottle 21. When the cage basin 1 is opened, by operating the handle 26, the feeding grid 20 can be moved back so as to let the hand of the operator enter the internal side of the cage for maintenance, or can be moved forward to put feed over it or change or recharge the bottle 21. The feeding grid 20 can slide on sliding surfaces 25 on the top edges of the lateral sides of the cage basin 1.

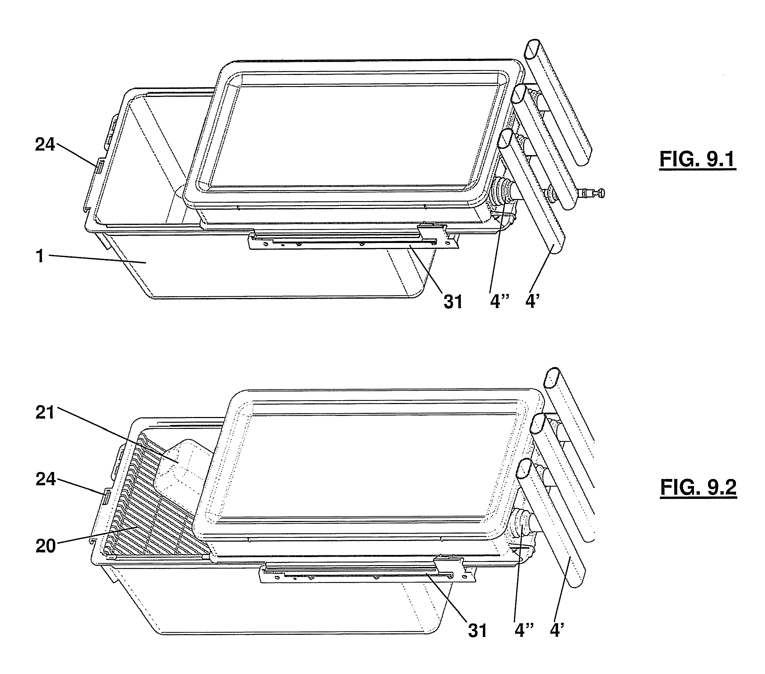

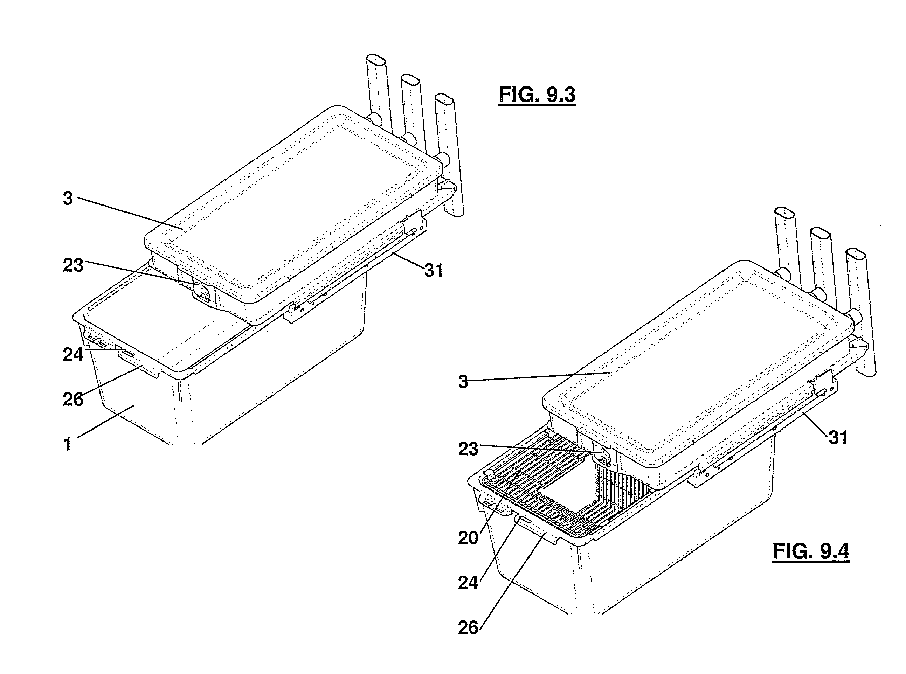

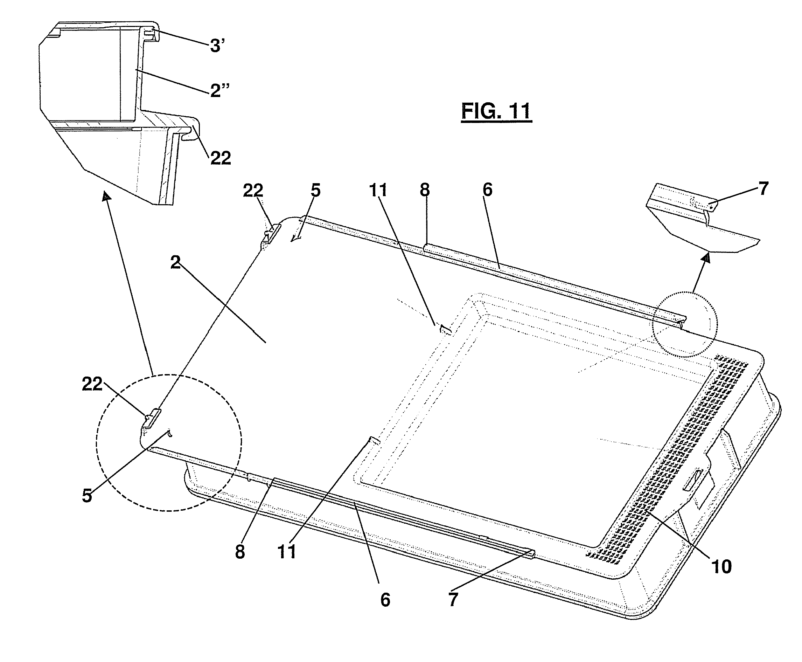

One or more back hooks 22 (fig. 11) are positioned in the back side of the lower basin 2 so as to engage with the top edge of the cage basin 1 for closing the cage. A pivoting front hook 23 (fig. 9.3) is placed on the front side of the external wall 2" of the lower basin 2, and can be turned down to engage with a corresponding hole 24 in the top edge of the front side of the lower basin 2, cooperating with the back hooks 22 to close the cage. For opening the cage the front hook 23 is turned up and the back hooks 22 are released from the top edge of the cage basin 1 .

The closed cage works preferably in negative pressure and air is extracted through the intermediate apertures 10 from the opening on the front of the top, and flows to the exhaust system 4.

The air enters into the cage from the back and is controlled by the calibrated hole 5 (dashed line in Fig. 2).

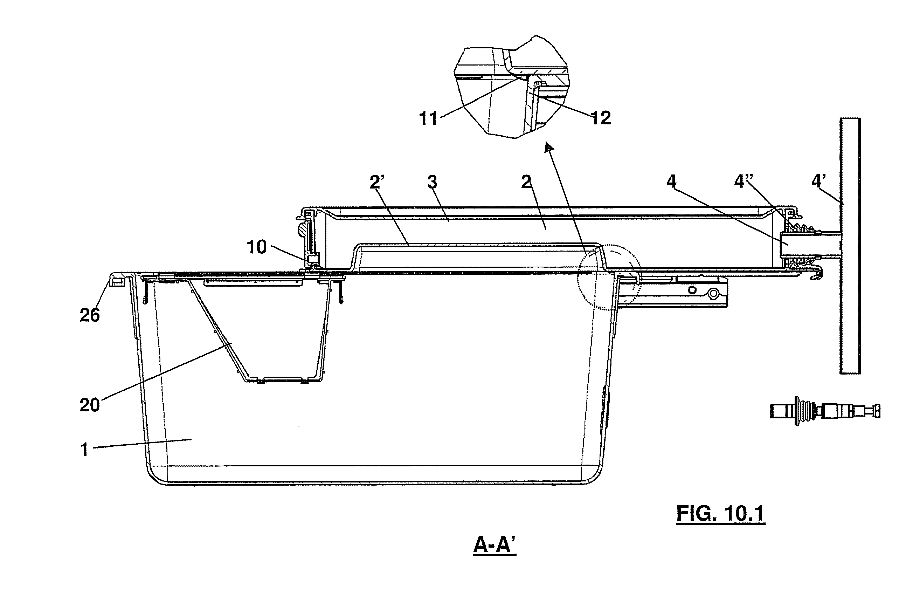

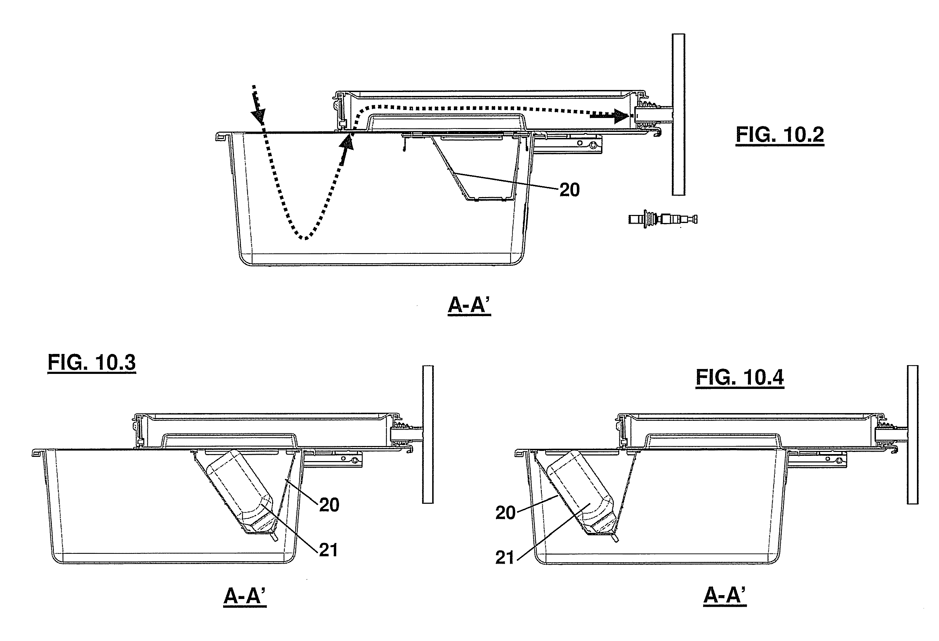

The cage basin 1 is opened by sliding it like a "drawer" by pulling the handle 26. One or more protrusions 11 (fig. 10.1) project from the lower external side of the lower basin 2. When the cage basin 1 is opened, slidably with respect to the cover, the rear upper edges 12 of the cage basin 1 engage against the protrusions 11, stopping sliding.

When the cage basin is opened, the rear holes 5 are outside the basin, and the air can only enter through the front of the "drawer" which is open (dashed line in fig 10.2).

When opened, the system offers much less resistance to the air flow aspirated, which increases as a consequence. When the cage is opened, the incoming air flow increases in volume and creates a barrier that protects operators from allergen exposures and unknown volatile chemical agents and potentially carcinogenic or pathogens which are moved inside the cage to the external filtration system.

Further protection with closed cage is guaranteed by an internal pressure, negative in respect to the outside environment.

Any possible leakage is from the external environment to the internal side of the cage.

The shelving system comprises a rack, for hosting a number of cages, in turn comprising (figs. 15, 16) vertical members 30 on which couples of sliding rails 31, 32 are fastened.

The sliding rails 31, 32 comprise front protrusions 33 for the cover, front protrusions 34 for the cage basin 1, rear protrusions 36 for the cage basin 1, rear upper antitilting hooks 35, and preferably wheels 37.

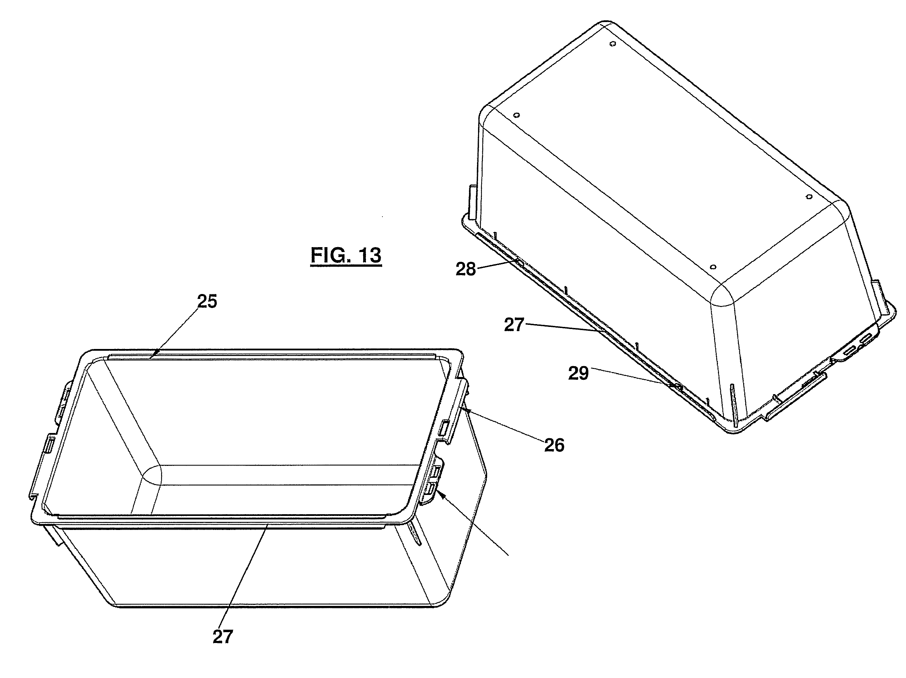

The lateral top edges of the cage basin 1 comprise supporting and sliding runners 27 (fig. 13) having front ends 28 and rear ends 29. The lateral bottom edges of the lower basin 2 comprise sliding runners 6 (fig. 11) having front ends 7 and rear ends 8.

When the cage is let sliding on the couples of rails 31, 32, for positioning it in the rack, the rear ends 29 of the sliding runners 27 engage with the rear protrusions 36. In this position the front ends 28 of the sliding runners 27 engage with the front protrusions 34, and the cage is firmly stopped on the sliding rails 31, 32. The sliding runners 6 of the lower basin 2 are also put on the couples of sliding rails 31, 32. The wheels 37 help the sliding of the cage.

Two kinds of cage opening are possible: either removing the whole of the cage or opening only the cage basin 1 with respect to the cover, while keeping the cover still.

For removing the whole of the cage, the front pivoting hook 23 of the top remains closed; the front side of the whole of the cage is at first raised, so as both the front ends 28 of the cage basin 1 and the front ends 7 of the sliding runners 6 of the lower basin 2 are released from the engagement with the front protrusions 33 and 34.

For opening only the cage basin 1 with respect to the cover, the front pivoting hook 23 is turned up; the front side of the whole of the cage is at first raised a little so as only the front end 28 of the sliding runners 27 of the cage basin 1 are released from the engagement, while the whole of the cage is let sliding a little ahead, so as the front ends 7 of the sliding runners 6 of the lower basin 2 engage with the front protrusions 33, locking the cover in that position: the front part of the cover is a little raised with respect to the couples of rails 31, 32, while the back part of the cover is prevented from tilting by engaging with the antitilting hooks 35, and the cage basin 1 can slide forward.

A pivoting indicator 40 is present in the front part of one or both sliding rails 31, 32, pivotin on a pin in the lateral sides of the rails. The front part 42 of the indicator may be hidden behind the front 43 of the rails, when the cage is positioned in the rack, or may project from the bottom of the rail when the whole of the cage is removed. For that purpose, the back side of the indicator 40 has a protrusion 41 which can project from a hole in the rail, when the cage is in, the protrusion 41 is lowered, so as to raise the front part 42, while when the cage is removed, the protrusion 41 raises, so as to lower the front part 42.

By the present invention a number of advantages and key features are obtained.

A housing cage for laboratory animals that when opened offers a guaranteed dynamic-protective barrier thanks to the air flow aspirated from the external environment towards the inside of the cage through the opened section.

When the cage is opened the air that flows through it increases and this change is governed by the change of air resistance between closed and opened cage.

Two kinds of cage opening are possible: either opening only the cage basin with respect to the cover, while keeping the cover still, or removing the whole of the cage.

A feeding grid can be slidably positioned inside the cage with or without a beveraging bottle, so as when the cage basin is opened, the feeding grid can be moved back, or can be moved forward to put feed over it or change or recharge the bottle.

A shelving system with couples of rails and protrusions for hosting and keeping the cages still or slidable on the rails.

Further protection with closed cage is guaranteed by an internal pressure, negative in respect to the outside environment.

## Claims

1. A cage for the containment of laboratory animals comprising:
- a cage basin (1);
- a cover in turn comprising a lower basin (2), able to be in contact with the cage basin, and a closing top (3), the lower basin (2) and the closing top (3) defining an internal empty space;
- one or more inlet openings (5) in the lower basin (2), wherefrom external air can come inside the cage basin (1);
- one or more intermediate apertures (10) in the lower basin (2), for the entrance of air inside the internal empty space of the cover;
- one or more outlet apertures in the rear side of the cover, for the exit of exhaust air.

2. A cage for the containment of laboratory animals as in claim 1, **characterized in that** said one or more inlet openings (5), said one or more intermediate apertures (10) and said one or more outlet apertures cooperate to form an air channel, such that: when the cage is closed, said one or more inlet openings (5) let said entrance of external air inside the cage basin (1); when the cage is partly opened, said one or more inlet openings (5) are totally external to the cage basin (1), and the external air enters from the opened side of the cage basin not covered by said cover; the air being able to flow from the inside of the cage basin (1), through said one or more intermediate apertures (10), to said one or more outlet apertures.

3. A cage for the containment of laboratory animals as in claim 1, **characterized in that** it is connected to an exhaust system (4) which catches and discharges the "dirty" air of the internal side of the cage through said air channel.

4. A cage for the containment of laboratory animals as in claim 1, **characterized in that** said lower basin (2) comprises a raising portion (2') in the lower side for increasing the available space in the cage basin (1) for living animals.

5. A cage for the containment of laboratory animals as in claim 1, **characterized in that** said closing top (3) is sealed to the lower basin (2) by means of a gasket having an external lip (3') extending from the upper edge of the lower basin and engaging against the edge of the top.

6. A cage for the containment of laboratory animals as in claim 1, **characterized in that** said cage basin (1), and/or said lower basin (2), and/or said closing top (3) are made of clear plastic, washable and autoclavable.

7. A cage for the containment of laboratory animals as in claim 1, **characterized in that** said cage basin (1) is symmetrical and reversible.

8. A cage for the containment of laboratory animals as in claim 1, **characterized in that** said intermediate apertures (10) are in the front lower side of the lower basin (2).

9. A cage for the containment of laboratory animals as in claim 1, **characterized in that** said intermediate apertures (10) are in the form of a gap with a grid made of holes.

10. A cage for the containment of laboratory animals as in claim 1, **characterized in that** said one or more inlet openings (5) are in the form of one or more slots placed in the back side of the lower basin (2), said slots are calibrated so as to control the flow of air into the cage, when the cage is closed, to work in negative pressure, the air being extracted through the intermediate apertures (10).

11. A cage for the containment of laboratory animals as in claim 1, **characterized in that** it comprises sliding surfaces (25) on the top edges of the lateral sides of the cage basin (1), where a feeding grid (20) is slidably positioned, and can move back or forward on said sliding surfaces, with or without a beveraging bottle (21).

12. A cage for the containment of laboratory animals as in claim 1, **characterized in that** said lower basin (2) comprises one or more back hooks (22) in the back side, so as to engage with the top edge of said cage basin (1) for closing the cage.

13. A cage for the containment of laboratory animals as in claim 12, **characterized in that** said lower basin (2) comprises a pivoting front hook (23) on the front side, said pivoting front hook can be turned down to engage with a corresponding hole (24) in the top edge of the front side of said lower basin (2), cooperating with said back hooks (22) to close the cage, while for opening the cage, said front hook (23) is turned up so as to release the back hooks (22) from the top edge of the cage basin (1).

14. A cage for the containment of laboratory animals as in claim 1, **characterized in that** one or more protrusions (11) project from the lower external side of said lower basin (2), so as when the cage basin (1) is slidably opened, with respect to the cover, the rear upper edges (12) of said cage basin (1) engage against said protrusions (11), stopping said sliding.

15. A shelving system for one or more cages as in claim 1, for the containment of laboratory animals, comprising:
- a rack for hosting a number of said cages, comprising vertical members (30);
- one or more couples of sliding rails (31, 32), fastened to said vertical members, on which said number of cages can slide;
- an exhaust system (4), for each of said number of cages, which catches and discharges the "dirty" air of the internal side of the cages through said air channel.

16. A shelving system as in claim 15, **characterized in that** said exhaust system (4) comprises one or more pipes (4') and bellows (4") connected to said one or more outlet apertures of said one or more cages.

17. A shelving system as in claim 15, **characterized in that**:
- said sliding rails (31, 32) comprise front protrusions (33) for said cover, front protrusions (34) for said cage basin (1), rear protrusions (36) for said cage basin (1), rear upper antitilting hooks (35);
- the lateral top edges of said cage basin (1) comprise supporting and sliding runners (27) having front ends (28) and rear ends (29);
- the lateral bottom edges of said lower basin (2) comprise sliding runners (6) having front ends (7) and rear ends (8).

18. A shelving system as in claim 17, **characterized in that** when a cage is positioned in the rack, it is let sliding on the couples of rails (31, 32), and the rear ends (29) of the sliding runners (27) engage with the rear protrusions (36), so as in this position the front ends (28) of the sliding runners (27) engage with the front protrusions (34), and the cage is stopped on the sliding rails (31, 32), the sliding runners (6) of the lower basin (2) being put on the couples of sliding rails (31, 32).

19. A shelving system as in claim 17, **characterized in that** when a cage has to be removed completely from the rack, the cage remains closed; the front side of the whole of the cage is at first raised, so as both the front ends (28) of the cage basin (1) and the front ends (7) of the sliding runners (6) of the lower basin (2) are released from the engagement with the front protrusions (33, 34).

20. A shelving system as in claim 17, **characterized in that** when only the cage basin (1) is opened with respect to the cover, the front side of the whole of the cage can be at first raised a little so as only the front end (28) of the sliding runners (27) of the cage basin (1) are released from the engagement, while the whole of the cage slides a little ahead, so as the front ends (7) of the sliding runners (6) of the lower basin (2) engage with the front protrusions (33), locking the cover, then the front part of the cover can be a little raised with respect to the couples of rails (31, 32), while the back part of the cover is prevented from tilting by engaging with the antitilting hooks (35), and the cage basin (1) can slide forward.

21. A shelving system as in claim 15, **characterized in that** one or more of said sliding rails (31, 32) comprise in the front part a pivoting indicator (40), pivoting on a pin in the lateral sides of the rails, the front part (42) of the indicator is hidden behind the front (43) of the rails, when the cage is positioned in the rack, or projects from the bottom of the rail when the whole of the cage is removed, the back side of the indicator (40) comprising a protrusion (41) which projects from a hole in the rail when the cage is removed, so as to lower said front part 42, while when the cage is positioned on the sliding rails, said protrusion (41) is lowered, so as to raise the front part (42).

22. A shelving system as in claim 15, **characterized in that** said sliding rails (31, 32) comprise wheels (37) to help the sliding of the cage.

23. A method for operating one or more cages in a shelving system as in any of claims from 15 to 22, for the containment of laboratory animals, comprising, for each cage to be positioned in the rack, to let the cage sliding on the couples of rails (31, 32), the rear ends (29) of the sliding runners (27) engaging with the rear protrusions (36), so as in this position the front ends (28) of the sliding runners (27) engage with the front protrusions (34), and the cage is stopped on the sliding rails (31, 32), the sliding runners (6) of the lower basin (2) being put on the couples of sliding rails (31, 32).

24. A method for operating one or more cages in a shelving system as in any of claims from 15 to 22, for the containment of laboratory animals, comprising, for each cage to be removed completely from the rack, starting from the cage closed and positioned in the rack: to raise first the front side of the whole of the cage, so as both the front ends (28) of the cage basin (1) and the front ends (7) of the sliding runners (6) of the lower basin (2) are released from the engagement with the front protrusions (33, 34); then removing the cage from the rack.

25. A method for operating one or more cages in a shelving system as in any of claims from 15 to 22, for the containment of laboratory animals, comprising, for each cage basin (1) to be opened with respect to the cover:
- first to raise the front side of the whole of the cage a little, so as only the front end (28) of the sliding runners (27) of the cage basin (1) are released from the engagement, while the whole of the cage slides a little ahead, so as the front ends (7) of the sliding runners (6) of the lower basin (2) engage with the front protrusions (33), locking the cover which does not slide;
- then to raise the front part of the cover a little with respect to the couples of rails (31, 32), while the back part of the cover is prevented from tilting by engaging with the antitilting hooks (35);
- to slide the cage basin (1) forward.
